# EUROPEAN PATENT APPLICATION

(11) **EP 1 780 971 A1**
(43) Date of publication of application: **02.05.2007**
(21) Application number: 05077478.5
(22) Date of filing: 28.10.2005
(51) Int. Cl.: H04L 29/06, H04L 12/56

(54) **Method and system for obtaining information by a bandwidth broker for admission control purposes**

(71) Applicant: Koninklijke KPN N.V., 2516 CK The Hague (NL)
(72) Inventor: Eijsberg, Peter, 2724 EP Zoetermeer (NL)
(74) Representative: Wuyts, Koenraad Maria

(57) **Abstract**

It is disclosed that a configuring entity (10) that is used in a network (1) for the configuration of network resources can be used by a bandwidth broker (11) for obtaining information regarding the availability of network resources in the network (1). The configuring entity (10) may for instance be a DHCP server or Radius server. Instead of obtaining availability information by the bandwidth broker (11) from many different resources in network (1), the bandwidth broker can according to the invention obtain information from a configuration entity (10). According to this invention it is acknowledged that information required by a bandwidth broker (11) is already contained in the storage means of a configuring entity (10).

## Description

### FIELD OF THE INVENTION

The present invention relates to a method and a system for obtaining, in a communications network, information from network resources by a bandwidth broker.

### BACKGROUND OF THE INVENTION

It is known that in communications networks the principle of admission control can be applied in order prevent the communications network to become overloaded and to assure that a suitable end-to-end quality of service (QoS) is provided over a network to the users. In particular for high bandwidth applications such as video on demand it is required to have an admission control function available in the communications network. High bandwidth applications do not perform adequately if there is not sufficient bandwidth available in the communications network. Insufficient bandwidth can for instance result in a dramatic decrease of performance quality of the application (e.g. picture quality degradation).

The functional entity that performs admission control tasks is often called a bandwidth broker or network admission control entity. A bandwidth broker determines if and, if so, which resources in the communications network to use when a user or an application demands an end-to-end connection. Upon such a request the bandwidth broker collects actual information from several resources in the communications network such as routers. Based on this information the bandwidth broker can determine if the required bandwidth is available in the communications network. For instance, it may be known from the information obtained by the bandwidth broker which communication links are available between the requesting user and the aimed destination. The collection of information from the resources in the communications network can for instance be accomplished by means of SNMP (Simple Network Management Protocol).

A bandwidth broker is described in US 2002/0087699. This known bandwidth broker obtains availability information from several entities in the communications network such as border routers and core routers. According to this prior art different types of bandwidth brokers are applied that are positioned at different aggregation levels. The known bandwidth broker is also able to reserve the requested resources by way of load control means. Further, the known bandwidth broker has to store the reservation state of the resources in the communications network that are reserved.

### PROBLEM DEFINITION

A disadvantage of the known bandwidth broker is that the bandwidth broker needs to collect information from many different resources in the communication network. During the process of obtaining information many resources are polled individually by the bandwidth broker. This requires relatively much capacity of the bandwidth broker and the resources, while communication paths between resources and one or more bandwidth broker are loaded with traffic dedicated to the process of bandwidth control.

### AIM OF THE INVENTION

It is an object of the invention to eliminate the drawbacks of the prior art and to provide an efficient system and method for the collection of information from resources in a communications network.

### SUMMARY OF THE INVENTION

It is disclosed that a configuring entity that is used in a communications network for the configuration of network resources can be used by a bandwidth broker for obtaining information regarding the availability of network resources in the communications network. A configuring entity in an IP based network is for instance a DHCP (Dynamic Host Configuration Protocol) server. A DHCP server configures other resources in the communications network by means of supplying IP-addresses to the network resources. Other tasks of a DHCP server are the delivery of TCP/IP stack configuration parameters such as the subnet mask and default router, and to provide other configuration information such as the addresses for printer, time and news servers.

The invention is not limited to DHCP servers. For instance, also a configuring entity such as a Radius server can be used by a bandwidth broker for obtaining information regarding the network resources in the communications network. Radius stands for Remote Authentication Dial-In User Service, and the Radius server is a authentication and accounting system used by Internet Service Providers (ISPs). The username and password that are provided by a user that has dialed in is passed to a RADIUS server. The Radius is able to check if the username and password are correct, after which the Radius server can authorize access to the ISP environment.

According to the invention, a configuring entity such as a DHCP server or a Radius server comprises information that is required for a bandwidth broker. Instead of obtaining, by the bandwidth broker, availability information or other types of information from many different resources in the communications network, the bandwidth broker can obtain the information from a configuration entity. According to this invention it is acknowledged that information required by a bandwidth broker is already contained in a storage means of a configuring entity. It may be possible that not all the information that is required by the bandwidth broker can be obtained from the configuration entity. In such a case, information is also obtained by the bandwidth broker from other entities comprised by the network.

An advantage of the present invention is that it is more efficient to have the bandwidth broker to obtain information from one single configuration entity instead of obtaining information from many different resources in the communications network. It is for instance efficient that the bandwidth broker only needs to address one source of information (i.e. the configuration entity) instead of many different sources. Further it is efficient that information requested by the bandwidth broker can be transported in one transaction instead of performing several transactions between the bandwidth broker and the individual resources.

### BRIEF DESCRIPTION OF THE DRAWING FIGURE

The foregoing aspects and many of the attendant advantages of this invention will be explained by reference to the following detailed description, when taken in conjunction with the accompanying drawing, wherein:
FIG. **1** is a block diagram illustrating an IP based network wherein a bandwidth broker is used for network admission control purposes.
FIG. **2** is a block diagram illustrating the bandwidth broker obtaining information from a DHCP server.
FIG. **3a** depicts a flow chart illustrating the information exchange between the requesting application and the bandwidth broker.
FIG. **3b** depicts a flow chart illustrating the information exchange between the bandwidth broker and the DHCP server.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

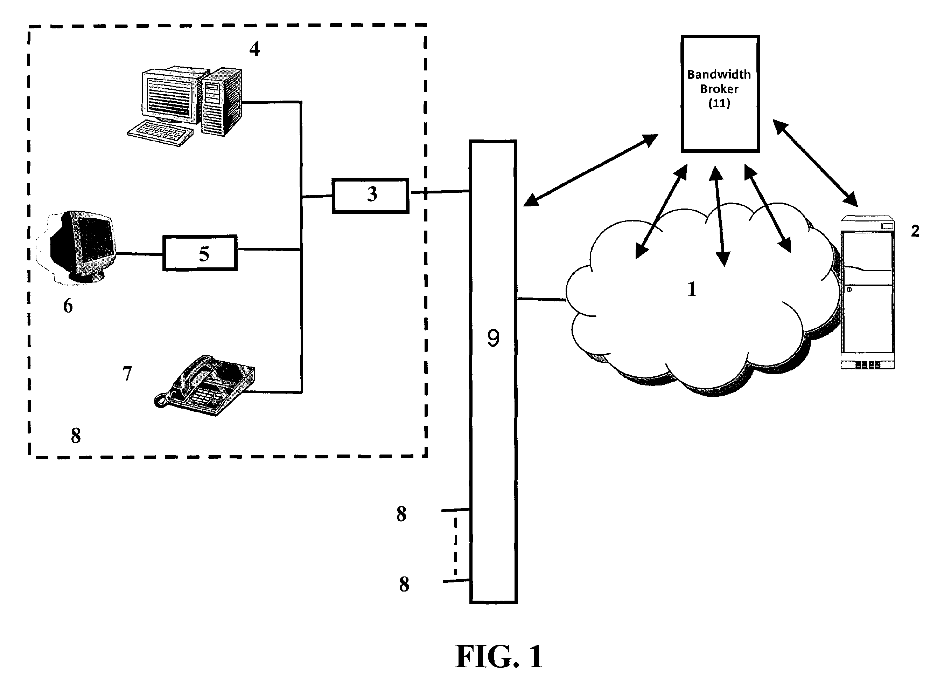

In FIG. **1** an IP based network (1) is depicted via which services such as triple play (telephony, television, data) services can be provided to customers. The IP based network (1) can be based on any type of communication technology, such as FTTH (fiber to the home), ADSL or VDSL. It may also be possible that the IP based network (1) is a mobile network or that the IP based network (1) contains network segments based on mobile technology. For the provisioning of such services, a server (2) is connected to the IP based network (1). The server (2) can for instance host a video server, although it is also possible that more than one media applications are hosted by server (2). In this embodiment the network architecture is based on the IP protocol although this is not a limitation in relation to the present invention. In the architecture according to FIG. **1** there is a DSLAM (9) (Digital Subscriber Line Access Multiplexer) that is connected to the IP based network (1) and to a customer environment (8). There can be many customer environments (8) connected to the DSLAM (9), and there can be many DSLAM's (9) connected to the IP based network (1).

The DSLAM (9) is in general part of an access infrastructure and may be operated by the same party that operates the broadband network (1). A DSLAM (9) takes connections from many customers and aggregates them onto a single, high-capacity connection to the broadband network (1). A DSLAM (9) is generally flexible and able to support multiple types of DSL (Digital Subscriber Line) in a single central office, and different varieties of protocol and modulation. For example, different customer environments (8) may be connected via a copper wire (xDSL) to the DSLAM (9). The customer environment (8) can be connected to the DSLAM (9) by means of for instance a residential gateway (3). The residential gateway (3) is network device located at the customer premise that interfaces between the home network (comprising end-user devices) and the public access network (comprising e.g. the DSLAM (9)). The residential gateway (3) may also be able to mutually connect the end-user devices that reside at the customer location (8). End-user devices may for instance be a personal computer (4) via which data or Internet services may be provided, a television (6) that is connected to the residential gateway (3) via a set-top box (STB) (5) for the provisioning of digital and/or interactive television, and an IP telephone (7) for the provisioning of IP telephony. The provisioning of this combination of services is often called triple play.

When there is a demand from a customer for a service, such as video-on-demand, a bandwidth broker (11) needs to obtain information from many customer environments (8), for instance in order to determine how many video-on-demand sessions are active, i.e. which set-top boxes (5) have registered to a particular television channel.

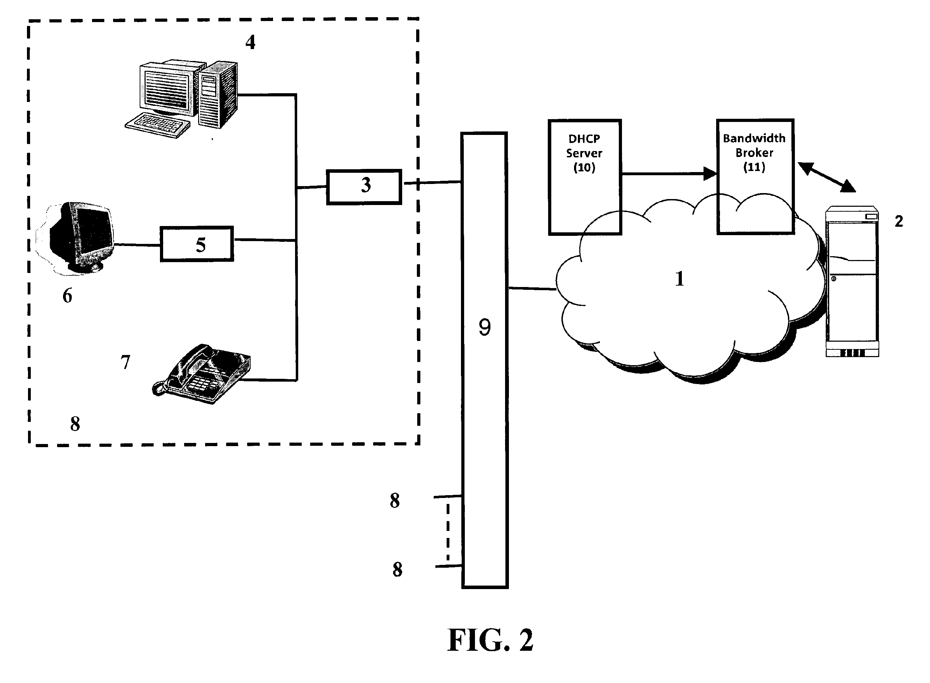

In FIG. **2** it is shown that the bandwidth broker (11) can obtain information from a DHCP server (10). The DHCP server (10) provides configuration data such as IP-addresses to set-top-boxes (5) and residential gateways (3). As a consequence, the DHCP server (10) has information available regarding e.g. the set-top-boxes (5) that are active at a certain moment of time. This information may for instance comprise the MAC-addresses of a each of the active set-top-boxes (5) (MAC-address stands for Media Access Control address, which is a hardware address that uniquely identifies each node of a communications network). The information contained by the DHCP server (10) may alternatively or additionally also comprise information identifying the type of active set-top-boxes (5), the IP-addresses that are provided to the active set-top-boxes (5), information identifying the DSLAM (9) to which each active set-top-box (5) is connected, user names that are associated to set-top-boxes (5) and the IP edge router (not depicted in FIG. **2)** to which the DSLAM's (9) are connected. By means of the information obtained from the DHCP server (10) the bandwidth broker (11) is able to determine the actual topology of the IP based network (10), for instance the topology including the set-top-boxes (5) that are active.

Additional to the information obtained from the DHCP server (10) the bandwidth broker (11) may also require information from other entities in the IP based network (1). For instance, there can be administrative information comprised by the IP based network (1) that also can be required by the bandwidth broker (11). This administrative information can for instance comprise information relating the maximum administratively permitted bandwidth and information regarding the architecture of the IP based network (1) (e.g. a virtual map containing the amongst others the nodes and the connections between the nodes comprised by the IP based network (1)).

According to the invention, it is acknowledged that information relating network entities such as set-top-boxes (5) is contained by the DHCP server (10). This information can for instance be contained in a storage means that is comprised by or accessible for the DHCP server (10). The storage means can for instance be database, a log file or a lease file. The bandwidth broker (11) can, based on the information obtained from the DHCP server (10), determine which set-top-boxes (5) are active at a certain moment of time and where in the network topology of the IP based network (1) these set-top-boxes are residing.

Upon a request from an application hosted by server (2) the bandwidth broker is herewith able to locate the active set-top-boxes (5) by making use of the information that is contained by the DHCP server (10). Based on this the bandwidth broker (11) is able to determine if there are sufficient resources available in the access network (comprising e.g. the DSLAM's (9), the IP edge routers, the access lines between the customer environments (8) and the DSLAM's (9), and the access lines between the DSLAM's (9) and the IP edge routers) for providing a suitable end-to-end quality of service. If there are sufficient resources (i.e. bandwidth) available the request from the server (2) can be granted, and the resources needed to provide an end-to-end connection are allocated. If there is not enough bandwidth available, the request will not be granted by the bandwidth broker (11).

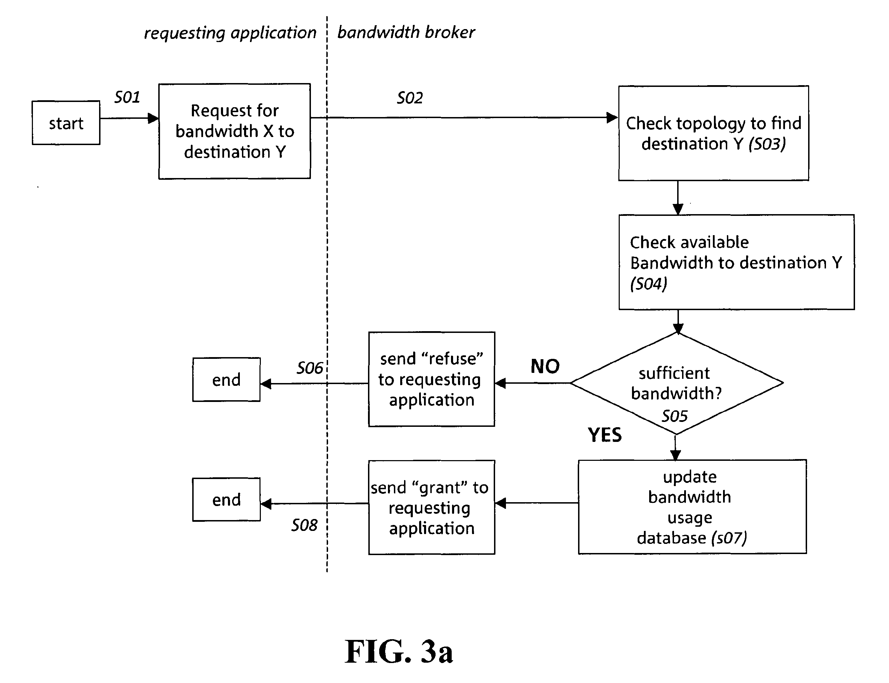

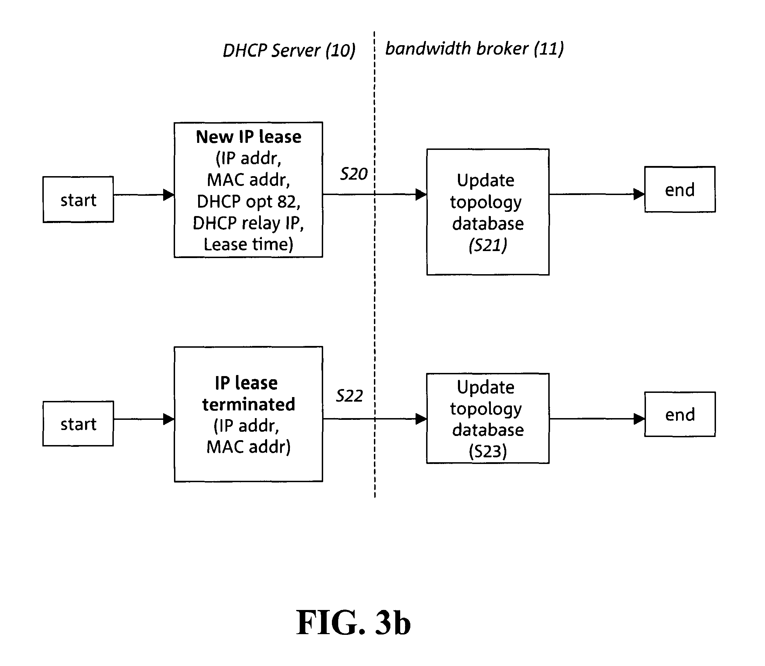

FIG. **3a** a flowchart is depicted that illustrates a possible embodiment according to the present invention. In step s01 an application requests for a service provided by the application hosted by server (2). For instance a user may want to use the video-on-demand service. In order to provide a sufficient quality of service, it is required that there is sufficient bandwidth (bandwidth X) available between the user location and the location (destination Y) of the server (2) that provides, in this case, a video-on-demand services (whereby the destination Y is a set-top-box (5)). In step s02 a request for bandwidth X is sent from the requesting application to the bandwidth broker (11). In step s03 the bandwidth broker (11) checks where in the topology destination Y is located. This can be accomplished by means of topology information that is already obtained from the DHCP server (10) (see FIG. **3b)** and that resides in a topology database of the bandwidth broker (11). This topology information can be stored in a storage means, such as a database, that is comprised by or accessible to the bandwidth broker (11). In step s04 the bandwidth broker (11) checks the amount of bandwidth that is available to destination Y. Information regarding the amount of bandwidth that is available to destination Y can be already comprised by the bandwidth broker (11) if the bandwidth broker (11) stores the requested bandwidth X each time a request is received in step s02. However, information regarding the availability of the resources (in general the availability of bandwidth) may alternatively or additionally be obtained from other entities, such as middleware, comprised by the IP based network (1). Bandwidth availability information can be stored in a storage means, such as a bandwidth usage database, that is comprised by or accessible to the bandwidth broker (11). In step s05 it is determined by the bandwidth broker (11) if the amount of bandwidth is sufficient, for instance by comparing a bandwidth value that is typical for video-on-demand services with the amount of bandwidth that is turned out to be available. If there is not sufficient bandwidth, the bandwidth broker (11) sends a 'refuse' to the requesting application (step s06). If there is sufficient bandwidth, the bandwidth broker (11) updates the bandwidth usage database (step s07) and sends a 'grant' to the requesting application (step s08).

FIG. **3b** a flowchart is depicted that illustrates a possible embodiment according to the present invention in relation to the process of updating the topology database of the bandwidth broker (11). When a resource in the IP based network (1) is activated, information regarding this activated resource (e.g. the set-top-box (5)) is sent from the DHCP server (10) to the bandwidth broker (11) (step s20). This information can comprise the IP-address of the set-top-box (5), the MAC-address of the set-top-box (5), the DSLAM (9) via which the set-top-box (5) is connected to the IP based network (1), and the IP edge router via which the concerning DSLAM (9) is connected. Consequently, the topology database of the bandwidth broker (11) will be updated (step s21). When the resource is deactivated again, the DHCP server (10) notifies the bandwidth broker (11) (step s22), and the bandwidth broker (11) will update the topology database (step s23). It may also be possible that the topology database of the bandwidth broker (11) additionally comprises information relating the topology of the IP based network (1) that is static rather than dynamic. If this is the case, then the topology database of the bandwidth broker (11) can be updated when a new resource is introduced into or removed from the IP based network (1).

## Claims

1. A network (1) comprising network resources, a configuring entity (10) and a bandwidth broker (11), wherein the bandwidth broker (11) obtains information from the configuring entity (10) for admission control purposes.

2. A network (1) according to claim 1, whereby the network (1) is an IP based network.

3. A network (1) according to claim 1 or 2, wherein the configuring entity (10) is a DHCP server.

4. A network (1) according to claim 1 or 2, wherein the configuring entity (10) is a radius server.

5. A network (1) according to any of the claims 1 to 4 wherein the information obtained by the bandwidth broker (11) is topology information.

6. A network (1) according to any of the preceding claims, whereby the network (1) is a wireless network.

7. A method for assessing, by a bandwidth broker (11), the availability of bandwidth in a network (1), the method comprising the steps of:
- receiving, by the bandwidth broker (11), a request for bandwidth to a destination;
- accessing, by the bandwidth broker (11), information obtained from a configuring entity (10); and
- using said information for assessing the availability of bandwidth in network (1).

8. A bandwidth broker (11) that is configured to obtain information for admission control purposes from a DHCP server (10) comprised by a network (1).

9. A configuring entity (10) comprised by a network (1), the configuring entity (10) comprising a communication stack for the exchange of information for admission control purposes between the configuring entity (10) and a bandwidth broker (11).

10. A configuring entity (10) according to claim 9, whereby the configuring entity (10) is a DHCP server.

11. A configuring entity (10) according to claim 9, whereby the configuring entity (10) is a radius server.
